# EUROPÄISCHE PATENTANMELDUNG

(11) **EP 1 990 616 A2**
(43) Veröffentlichungstag der Anmeldung: **12.11.2008**
(21) Anmeldenummer: 08015262.2
(22) Anmeldetag: 05.11.1999
(51) Int. Cl.: G01H 1/00

(54) **Vorrichtung und Verfahren zum Erfassen von Schwingungssignalen und/oder Körperschallsignalen**

(30) Priorität: 06.11.1998 DE 19851338; 18.12.1998 DE 19858666
(62) Teilanmeldung aus: 99250394.6
(71) Anmelder: Prüftechnik Dieter Busch AG, 85737 Ismaning (DE)
(72) Erfinder: Busch, Dieter, 85737 Ismaning (DE); Franke, Dieter, 01326 Dresden (DE); Staub, christoph, 80687 München (DE)
(74) Vertreter: Schwan - Schwan - Schorer

(57) **Zusammenfassung**

Die Erfindung betrifft eine Vorrichtung zum Erfassen von Schwingungssignalen und/oder Körperschallsignalen eines technischen Systems, das wenigstens ein Messobjekt umfasst, mit einem tragbaren Datensammelgerät, das mit dem wenigstens einen Messobjekt zugeordneten Mess-Stellen verbindbar ist, und die Bedien- und Funktionseinrichtungen aufweist, mittels denen wenigstens eine Messaufgabe an wenigstens einer der Mess-Stellen abarbeitbar ist, und wenigstens ein hieraus resultierendes Messergehnis erfassbar ist, wobei das Datensammelgerät (20) wenigstens ein Speichermittel (35) umfasst, in dem das wenigstens eine Messobjekt (11, 12, 13, 14) mit seinen Mess-Stellen (a, b, c, d, e, f) derart abgelegt ist, dass dieses auf einer Anzeigeeinrichtung (23) des Datensammelgerätes (20) mit seinen Mess-Stellen (a, b, c, d, e, f) darstellbar ist, und wobei anhand dieser Darstellung von einer Bedienperson eine beliebige oder vorgegebene der dargestellten Mess-Stellen (a, b, c, d, e, f) auswählbar ist und für die ausgewählte Mess-Stelle (f) die wenigstens eine Messaufgabe abrufbar ist. Erfindungsgemäß weist das Datensammelgerät (20) Mittel zur Informationsausgabe an die Bedienperson auf akustischem Wege auf.

## Beschreibung

Die Erfindung betrifft eine Vorrichtung und ein Verfahren zum Erfassen von Schwingungssignalen und/oder Körperschallsignalen mittels eines tragbaren elektronischen Datensammlers mit den im Oberbegriff des Anspruchs 1 beziehungsweise Anspruchs 15 genannten Merkmalen.

Als Datensammler bezeichnete Vorrichtungen, welche auch zum Erfassen von akustischen Zustandsdaten geeignet sind, werden in der WO 95/08806 beschrieben. Vorrichtungen dieser Art sind geeignet, Geräuschdaten und Schwingungsdaten an Maschinen zu messen, zu sammeln und gegebenenfalls zu bewerten. Eine spezielle Anwendung besteht darin, Geräusche von Maschinenlagem zu messen und zu analysieren.

Wie bekannt, besteht ein wichtiges Problem darin, dass bei solchen Messungen genauestens festgehalten wird, an welcher Mess-Stelle an einem Messobjekt eine Messung erfolgt. Verwechslungen in dieser Beziehung sind von erheblichem Nachteil, da sie unter Umständen Korrekturmassnahmen nach sich ziehen, welche im günstigsten Fall überflüssig sind und im schlimmsten Fall Folgeschäden an einer inspizierten Maschine nach sich ziehen, zum Beispiel bei der fehlerhaften Korrektur einer Unwucht.

In diesem Zusammenhange hat es sich bewährt, Mess-Stellen vorzusehen, welche eine geeignete Kodierung aufweisen, so dass die Wahrscheinlichkeit reduziert wird, eine fehlerhafte Zuordnung zwischen Messergebnis und zugehöriger Mess-Stelle zu dokumentieren. Eine entsprechende Vorrichtung wird in der DE 43 20 657 beschrieben.

Im Zuge einer weitergehenden Automatisierung von Fabrikanlagen oder anderen grossflächig angelegten technischen Einrichtungen ergeben sich jedoch immer mehr automatisch oder semi-automatisch abzufragende Mess-Stellen, sei es für Temperaturen, für akustische Emissionen, für Drücke, Füllstände, Gewichte und so weiter. Bei der semi-automatischen Abfrage solcher Betriebsdaten mittels eines tragbaren Daten-Erfassungs- und -Sammel-Gerätes muss eine Bedienperson daher im Vorwege relativ genau instruiert werden, welche Gegebenheiten in einer Fabrikhalle oder an einer Maschine, einem Maschinenpark und so weiter vorliegen und in welcher Art, Weise und in welchem Turnus erforderlichenfalls Messungen der genannten Arten vorzunehmen sind. Die Erledigung solcher Aufgaben in grösseren Werkskomplexen ist daher an eine kleine Anzahl von Spezialisten gebunden. Es ist nachteilig, dass solche Aufgaben normalerweise nur dann delegiert werden können, wenn im Vorwege Instruktionen stattgefunden haben. Weder Fachpersonal, noch geringer qualifiziertes Bedienpersonal kann bei Krankheit oder sonstig bedingtem Personalmangel in diesem Zusammenhang risikolos eingesetzt werden.

Eine Vorrichtung gemäß den Oberbegriff von Anspruch 1 bzw. ein Verfahren gemäß dem Oberbegriff von Anspruch 15 sind aus der WO 97/10491 A1 bekannt, wobei die Messobjekte und die Mess-Stellen in alphanumerischer Form auf einem Bildschirm angezeigt werden, der auch zur Ausgabe von Messergebnissen in bildlicher/grafischer Form dient.

Die WO 98/28599 betrifft ein System zur Schwingungsüberwachung von Maschinen, welches ein Handgerät mit Schwingungssensor sowie eine stationäre Zentraleinheit aufweist, an welche das Handgerät zur Datenauswertung angeschlossen werden kann, wobei an jedem Messpunkt mindestens eine Standardmessaufgabe sowie situationsabhängig mindestens eine erweiterte Messaufgaben durchzuführen sind.

Es ist Aufgabe der Erfindung, eine Vorrichtung und ein Verfahren zum Erfassen von Schwingungs- und Geräuschzustandsdaten und Prozessdaten als zugeordnete Hilfsgrössen zu schaffen, welche auch durch weniger qualifiziertes Personal benutzt und bedient werden kann, dabei für umfangreichere Maschinenareale genutzt werden kann und eine noch besser abgesicherte Erfassung von Geräusch- und Schwingungsdaten an Maschinen oder Maschinenteilen, gegebenenfalls auch an strukturellen Teilen (Trägern, Maschinenböden, Gehäusen und so weiter), ermöglicht.

Diese Aufgabe wird erfindungsgemäss durch eine Vorrichtung mit den im Anspruch 1 genannten Merkmalen gelöst. Dadurch, dass das Datensammelgerät wenigstens ein Speichermittel umfasst, in dem das wenigstens eine Messobjekt mit seinen Mess-Stellen derart abgelegt ist, dass dieses mit seinen Mess-Stellen auf einer Anzeigeeinrichtung des Datensammelgerätes darstellbar ist, anhand dieser Darstellung von einer Bedienperson eine beliebige der dargestellten Mess-Stellen auswählbar ist und für die ausgewählte Mess-Stelle die wenigstens eine Messaufgabe abrufbar ist, wobei das Datensammelgerät Mittel zur Informationsausgabe an die Bedienperson auf akustischem Wege aufweist, ist vorteilhaft möglich, dass die Bedienperson mit der Vorrichtung, beispielsweise innerhalb einer Werkhalle oder dergleichen, zu verschiedenen Maschinen oder dergleichen laufen kann. Die Maschinen besitzen bekänntermassen sogenannte Mess-Stellen, an die das Datensammelgerät anschliessbar ist. Mittels an dem Datensammelgerät angeordneter Bedieneinrichtungen ist nunmehr die Durchführung wenigstens einer bestimmten Messaufgabe an einer angeschlossenen Mess-Stelle möglich. Das Datensammelgerät besitzt Mikrorechner- und Speichereinheiten, mittels denen die wenigstens eine Messaufgabe abgearbeitet werden kann und Messergebnisse gespeichert werden können. Mittels des Datensammelgeräts sind unterschiedliche Messaufgaben an mehreren Mess-Stellen von auch unterschiedlichen Maschinen und dergleichen durchführbar. Nach Abarbeiten einer sogenannten Route, die das Durchführen der Messung an mehreren Mess-Stellen an mehreren Maschinen beinhalten kann, können die gesammelten Messdaten einem übergeordneten System zur weiteren Auswertung, statistischen Erfassung oder dergleichen überspielt werden.

Das Datensammelgerät ist mit einem Bildschirm, Display oder dergleichen ausgestattet, auf dem eine Darstellung, insbesondere eine bildliche und/oder grafische Darstellung, der zu untersuchenden Maschinen möglich ist. Die Darstellung erfolgt hierbei entweder schematisch oder in fotografischer Wiedergabe. Gleichzeitig sind auf dem Bildschirm die Mess-Stellen erkennbar. Soll nun eine bestimmte Messaufgabe an einer der Mess-Stellen durchgeführt werden, kann dieses auf dem Bildschirm in besonderer Weise, beispielsweise durch farbliche Markierung, Hinweispfeile oder dergleichen, kenntlich gemacht werden. Somit wird auch für eine ungeübte (ungelernte) Bedienperson möglich, das Datensammelgerät definiert an eine ausgewählte Mess-Stelle anzuschliessen. Hierzu ist nur noch die Darstellung auf dem Bildschirm mit der Wirklichkeit zu vergleichen. Insbesondere ist vorgesehen, dass alle möglichen Mess-Stellen kenntlich gemacht sind und die Bedienperson sich eine Reihenfolge der Abarbeitung selber auswählt.

Insbesondere kann vorgesehen sein, dass in dem Datensammelgerät ein Lageplan oder dergleichen einer grösseren zusammenhängenden Maschinenansammlung (Fabrikanlage oder dergleichen) abgespeichert ist. Diese beinhaltet eine Vielzahl von zu überwachenden Maschinen. Die jeweiligen Maschinen können durch zoomartiges Vergrössern oder ausschnittsweise Darstellung aus der gesamten Anordnung einzeln dargestellt werden, so dass die wirklichkeitsnahe Darstellung mit den vorhandenen Mess-Stellen auf dem Bildschirm erfolgen kann. Die einzelnen Bilder sind in Bildpunkten interaktiv untereinander verknüpft (zum Beispiel Maschine in Fabrikhalle anklicken -> Bild springt auf Darstellung Maschine)

Schliesslich ist vorgesehen, dass bei angeschlossenem Datensammelgerät an der ausgewählten, gegebenenfalls vom Bildschirm vorgegebenen Mess-Stelle die bildliche Darstellung von einem Menü zur Durchführung der Messaufgabe überlagert ist. Gleichzeitig kann eine Darstellung der ermittelten Messwerte, bezogen auf die vorgegebene Mess-Stelle, erfolgen. Gegebenenfalls erfolgt gleichzeitig eine Bewertung der Messwerte.

Bei der Erfindung ist vorzugsweise die bildliche/grafische Darstellung von Maschinen, Aggregaten oder dergleichen auf einer Anzeigeeinrichtung eines tragbaren Datensammelgeräts vorgesehen, wobei Mess-Stelle, Messaufgabe, Messwerte und/oder Messbewertung zusammengehörig auf dem Bildschirm darstellbar sind. Gleichzeitig erfolgt für Dokumentation und weitere Auswertung eine entsprechende Speicherung.

In bevorzugter Ausgestaltung der Erfindung ist vorgesehen, dass nach Abarbeitung der wenigstens einen Messaufgabe wenigstens eine weitere Messaufgabe der ausgewählten Mess-Stelle abarbeitbar ist. Hierdurch lässt sich sofort die, das heisst die neuerliche Mess-StellenErkennung, die nächste Messaufgabe automatisch abarbeiten.

In weiterer bevorzugter Ausgestaltung der Erfindung ist vorgesehen, dass nach Abarbeitung der wenigstens einen Messaufgabe der ausgewählten Mess-Stelle das Datensammelgerät automatisch die der ausgewählten Mess-Stelle in der bildlichen/grafischen, räumlich nächstliegenden Mess-Stelle aufruft. Hierdurch wird eine besonders einfache und zuverlässige Bedienführung möglich. Insbesondere kann beispielsweise am linken Rand der Darstellung mit der Abarbeitung der Mess-Stellen begonnen werden. Von dieser "linken" Mess-Stelle wird dann von der Bedienführung die nächste, rechts daneben liegende Mess-Stelle abgearbeitet.

Die Aufgabe wird auch durch ein Verfahren mit den im Anspruch 15 genannten Merkmalen gelöst, welches das Sammeln oder das Aus- und Bewerten von Schwingungssignalen und/oder Körperschallsignalen oder deren Hilfsgrössen, an Aggregaten, Maschinen oder deren Bauteilen betrifft, und wobei mittels eines Datensammelgerätes und angeschlossener Messwertaufnehmer die genannten Daten zur Auswertung, Speicherung oder Darstellung zunächst in einen Datensammler und bei Bedarf in einen übergeordneten Rechner messbar und eingebbar sind, darüber hinaus eine Führung eines Benutzers bei turnusmässiger oder adhoc angesetzter Erfassung von Messdaten beim Messdatensammeln anhand einer am Datengerät visuell, speziell hochauflösend visuell, dargestellten Beschreibung des Standortes eines zu inspizierenden Aggregates innerhalb eines Ortes (oder einer grossflächigen Umgebung) und der Anordnung der dort lokalisierten Mess-Stellen erfolgt, wobei gleichzeitig die dort durchzuführenden Messaufgaben in symbolischer, oder insbesondere hochgenauer, Darstellung erfolgt, und dabei zumindest anteilig durch folgende Verfahrensschritte oder weitere Merkmale gekennzeichnet ist:

Die Führung eines Benutzers oder einer Bedienperson beim Datensammeln erfolgt anhand der bildlichen/ grafischen Darstellung eines Gebiets-Werks-, Hallen- oder Anlagenplanes mit den Mess-Stellen einer räumlichen stufenweise verknüpften Anordnung der dort befindlichen Gegenstände oder Elemente, in der die zu messenden Aggregate mit eben diesen Mess-Stellen sich befinden.

Die Gegenstände oder Elemente werden an einem Anzeigeteil des Datensammelgeräts in jeweiligen, einzeln zueinander (gegebenenfalls auch mehrfach) in Beziehung gesetzten Bildern von Lageplänen und Aggregatsabbildungen dargestellt.

Daran verknüpft ist eine bildliche/grafische Darstellung eines zu inspizierenden oder zu lokalisierenden Aggregates mit der Anordnung daran befindlicher Mess-Stellen. Zugleich wird dargestellt, welche Reihenfolge der Abarbeitung einer vorgegebenen Messaufgabe vorgesehen oder vordefiniert ist. Ein Benutzer kann die Hierarchie der Arbeitsschritte der einzelnen Mess-Stellen und der zugeordneten Messaufgaben nach eigenem Ermessen festlegen. Es ist mit der genannten neuartigen Darstellung zusätzlich möglich, mit dem gleichen Bildschirm und in bevorzugt überlagerter Darstellung die optische Auswertung eines Messergebnisses zu visualisieren, wobei Massnahmen getroffen werden können, dass eine direkte, unmissverständliche und gleichzeitige Visualisierung eines gerade inspizierten Messobjektes zu Kontrollzwecken erfolgt. Wenn die Ergebnisse der Messung und deren Aus-oder Bewertung direkt an der Grafik (dem Bild) des Aggregates dargestellt werden, (oder in überlagerter Form), so können Fehlerstellen direkt erkannt werden und bei Erkennen von kritischen Zuständen vor Ort auch direkte (Sofort-)Massnahmen eingeleitet werden.

Die Benutzerführung stützt sich gemäss der Erfindung auch auf bildliche/grafische Darstellungen und stellt somit eine sogenannte grafische Benutzeroberfläche dar (engl.: graphic user interface). Diese bildlichen/grafischen Darstellungen können nicht nur in passiver Darstellungsform erscheinen, sondern insbesondere von interaktivem Charakter sein. Damit kann ein Benutzer unter Verwendung von Eingabegeräten, wie zum Beispiel Keypad Touchpad, Light-Pen, Joystick und so weiter, ein jeweils interessierende bildliche/grafische Darstellung der Mess-Stelle aktivieren oder sonst wie als softwaremässiges Objekt betätigen, unbeachtet lassen oder abwählen, das heisst inaktivieren oder schliessen.

In einer weitergehenden Ausgestaltung der Erfindung wird vorgesehen, dass grafische Editoren herangezogen werden, um in dem Datensammelgerät selbst oder einem übergeordneten Rechner, wie zum Beispiel einem Personal Computer (PC), spezielle interaktive Punkte oder Objekte der Mess-Stellen zu spezifizieren oder für eine Abspeicherung vorzumerken. Hierzu ist es dienlich, wenn wiederkehrende Bildelemente und Verknüpfungs-Symbole sowie Arbeitsanweisungs-Symbole in einer Bibliothek bereitgehalten werden, so dass eine schnelle Wiederverwendung erfolgen kann.

Die erfindungsgemässe Vorgehensweise wird erleichtert, wenn solche grafischen Elemente oder Objekte mit blinkender oder farbiger oder inverser Darstellungsmöglichkeit vorgesehen sind. Auf diese Weise gelingt es, die Suche, gegebenenfalls die Aktivierung, einer Mess-Stelle beim Abarbeiten einer Route durch Darstellung entsprechender Bilder oder Skizzen zu erleichtern, so dass keinerlei Unklarheiten hinsichtlich der Reihenfolge zu inspizierender Mess-Stellen und der dort auszuführenden Messaufgaben entstehen können.

Gemäss der Erfindung ist es von Nutzen, wenn Messorte, von denen bekannt ist, dass sie mit einer automatischen Mess-Steilen-Erkennungseinrichtung ausgestattet sind, als solche bildmässig, insbesondere in perspektivisch korrekter Darstellung, mitsamt einer optimal vorgesehenen Reihenfolge der Messaufgaben, dargestellt werden. Eine Bedienperson hat die manuelle Wahl- und Eingriffsmöglichkeit der Reihenfolge der Mess-Stellen eines Objektes und der zugehörigen Messaufgaben, so dass Mess-Stellen mit automatischer Identifikations-oder Erkennungseinrichtung zwar dargestellt werden, aber anhand subjektiver Entscheidungen selektiert und in einen Messvorgang einbezogen werden können. Weiterhin ist bevorzugt, dass die Art und die wegmässige Optimierung der Reihenfolge der Abarbeitung davon abhängig gemacht wird, welche Messergebnisse an welchem Ort und zu welcher Zeit, aktuell oder in der Vergangenheit, erzielt wurden, so dass ständig nur unbedingt erforderliche oder zumindest vorrangige Messaufgaben erledigt werden. Gleichzeitig können möglichst kurze Wege für das Messpersonal ausgerechnet und visualisiert werden. Eine solche Visualisierung von Wegen, Reihenfolgen oder Runden kann nach Art eines Dia-Vortrages gestaltet werden oder nach Art einer Video- beziehungsweise Film-Darstellung.

Ein wichtiger und vorteilhafter Teilaspekt der Erfindung besteht darin, dass eine symbolhafte oder vollständige Arbeits-Anleitung visuell über einen Bildschirm wiedergegeben werden kann in Bezug zu den Mess-Stellen. Damit ist es möglich, eine anliegende Messaufgabe näher zu erläutern. Dies ist vorteilhafter, als eine Aufgabe nur mittels vereinbarter Symbole anzugeben. Hierzu können beispielsweise solche Informationen visualisiert werden, ob und in welcher Form ein Wechsel eines Messaufnehmers durchzuführen ist, welche geometrischen Randbedingungen zu beachten sind, welche Handhabung eines Werkzeuges oder Hilfsmittels gestattet oder insbesondere gerade nicht gestattet ist, ob eine spezielle Kabelführung zu beachten ist und so weiter.

Gemäss der Erfindung besteht eine vorteilhafte Visualisierungsweise darin, unter Nutzung eines hochauflösenden Displays nunmehr ein Messergebnis und dessen Be- und Auswertung mit bekannten grafischen Mitteln direkt zu den Mess-Stellen in einem Aggregatebild zu kombinieren und eine sinngemässe Zuordnung darzustellen. Dabei können insbesondere Darstellungsweisen unter Benutzung sogenannter Bargrafen inklusive Grenzwertdarstellung, oder richtungsbezogen mit unterschiedlicher Pfeillänge oder -stärke, oder unterschiedlichen Kreisdurchmessern, bezogen auf eine jeweils visualisierte Mess-Stelle zur Anwendung gelangen. Durch diese Art grafischer Unterstützung ist eine sofortige Bewertung durch den Nutzer oder die Bedienperson eines entsprechenden Datensammelgeräts möglich. Da es erfahrungsgemäss weder sinnvoll noch möglich ist, alle eventuell interessierenden Informationen gleichzeitig auf einem Display darzustellen, kann gemäss der Erfindung ein jeweils interessierender Teil der Bildschirmdarstellung in sogenannter Zoom-Darstellung vergrössert wiedergegeben werden. Dieser Vorgang wird dadurch erleichtert, dass der Bildschirm berührungsempfindlich ausgelegt ist und zum Beispiel ein einmaliges Antippen einer interessierenden Einzelheit eine vergrösserte Darstellung von dieser bewirkt.

In ähnlicher Vorgehensweise ist es unter Umständen genauso interessant, nicht nur detailliertere Informationen zu erhalten, sondern auch pauschalisierte und zusammengefasste Darstellungen. Durch geeignete Eingabevorgänge mittels eines sogenannten Touchpads oder ähnlichem, gegebenenfalls durch eine Tastatur, kann ein entsprechendes Programm aktiviert werden, welches zur Visualisierung interessierender Kennwerte, Idealwerte, Maximalwerte, statistischer Werte und vergleichbarer Kennziffern dient, die in visuell eindeutiger Weise mit einer gleichzeitig visualisierten Mess-Stelle oder Messobjekt verknüpft sind.

Unter Verwendung eines grafischen Menüs können, ausgehend von einer visualisierten Mess-Stelle, dann auch weitere Analysen gestartet werden, zum Beispiel die Errechnung von Frequenzspektren, Zeitsignaldarstellungen, Verteilungsformen und Histogrammen und ähnlicher zusammenfassender Darstellungen. Darauf können deren Ergebnisse visualisiert und gesichtet werden, bei Bedarf auch nur anteilig und durch den Datensammler auf wesentliche Aussagen konzentriert.

Wie in diesem Falle ist es unter Verwendung des erfindungsgemässen Verfahrens stets nützlich, die besonders wichtigen Informationen optisch/visuell hervorzuheben, sei es durch eine farblich hervorgehobene oder sei es durch blinkende Darstellung von zum Beispiel visualisierten Maschinengruppen, Maschinen, Mess-Stellen, zu beachtenden Arbeitsanweisungen oder zu beachtenden Messergebnissen.

Es versteht sich, dass zur Anzeige und Visualisierung von Ergebnissen die unterschiedlichsten, an sich bekannten grafischen Darstellungsformen verwendet werden können, insbesondere nunmehr mit besonderem Vorteil auch dreidimensionale Darstellungen. Darüber hinaus können die an sich bekannten grafischen Darstellungsformen multimedial erweitert werden, zum Beispiel durch gleichzeitiges Aussenden von akustischen Signalen. Von besonderem Vorteil sind dabei solche akustischen Signale, welche sich direkt von einem zu untersuchenden akustischen Signal ableiten, dabei aber mit Vorteil frequenzgefiltert oder frequenztransformiert sind oder mit einem Testgeräusch in vordefinierter Weise gemischt sind. Zu diesem Zweck kann das Verfahren einer Bedienperson die Nutzung von Kopfhörern vorschlagen, so dass ein vorhandenes Hallengeräusch reduziert wird. In ähnlicher Form können Schwingungssignale von mechanischen Strukturen, insbesondere von Gehäusen oder Maschinenböden, in visueller oder multimedialer Weise, und nach verschiedenen Darstellungsarten, sichtbar oder besser interpretierbar gemacht werden. Hierdurch erleichtert sich das Ausführen von Instandhaltungsarbeiten, wie das Auswuchten oder Ausrichten von Maschinen oder -teilen, ganz wesentlich, und kann unter Umständen von nicht vorinstruiertem Fachpersonal durchgeführt werden.

Durch die Verwendung multimedial gestalteter Arbeitsanweisungen können auch andere Standard-Tätigkeiten eines Nutzers eines Datensammlers vereinfacht werden. Solche Arbeitsanweisungen fallen insbesondere unter folgende Kategorien "Ortswechsel" (weist einen Nutzer an, sich in die Nähe einer vordefinierten Mess-Stelle zu begeben), "Infomationsbeschaffung" (informiert einen Nutzer beispielsweise über Randbedingungen einer folgenden Messaufgabe), "Messung" (betrifft die eigentliche Ausführung einer Messung inklusive zum Beispiel einer Plausibilitätsbetrachtung hinsichtlich Gültigkeit eines Messergebnisses), "allgemeine Tätigkeit" (wie zum Beispiel ein Ventil oder einen Schalter betätigen) oder sie betreffen nur die einfache Kategorie eines "Wartezustand".

Die im Vorstehenden beschriebenen Einzelheiten der Erfindung spiegeln sich wieder in Einzelheiten der erfindungsgemäss zugehörigen Gerätschaften oder Systeme, insbesondere in der zugehörigen Software. Hierzu ist Folgendes zu nennen:

In vorteilhafter Ausgestaltung der Erfindung kann ein erfindungsgemässes Datensammelgerät erfasste Daten mittels einer drahtlosen oder drahtgebundenen Übertragungseinrichtung an einen übergeordneten Rechner senden oder Vorgabewerte von einem solchen empfangen. Weiterhin ist es von Vorteil, wenn das Datensammelgerät mit Messwertaufnehmern ausgestattet ist, welche eine automatische Mess-Stellenerkennung ermöglichen. Von besonderem Nutzen ist es gemäss der Erfindung, wenn das Datensammelgerät die Anordnung von Mess-Stellen nicht nur anhand einer Übersichtsdarstellung, zum Beispiel nach Art eines Luftbildes, visualisieren kann, sondern auch die genaue Position und das Aussehen eines einzelnen Mess-Stellen im Detail wiedergeben kann. Zu diesem Zwecke werden nicht nur monochrom wirkende Bildschirme, sondern speziell auch farbig arbeitende Bildschirme, vorgeschlagen, insbesondere solche auf Basis von Flüssigkristall-Technologie.

Bevorzugte, wenn auch als Beispiel zu betrachtende Details der Erfindung werden anhand der in der Zeichnung dargestellten Einzelheiten erläutert. Es zeigen:
Figur 1 in symbolisierter perspektivischer Darstellung eine Messaufgabe an einem Maschinenaggregat im Zusammenspiel mit einem erfindungsgemässen Datensammelgerät mit hochauflösender Visualisierungseinrichtung;
Figur 2 als Beispiel einen durch die Visualisierungseinrichtung wiedergegebenen detaillierten Übersichtsplan und einen Arbeits-Hinweis und
Figuren 3 und 4 ein weiteres konkretes Beispiel der Erfindung.

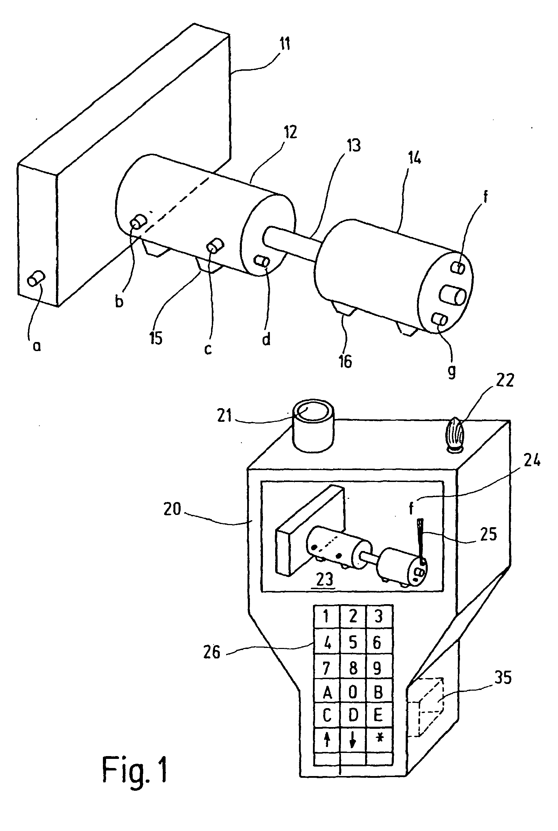

Bei dem in Figur 1 gezeigten Maschinenaggregat kann es sich zum Beispiel um die Kombination eines in einem Lüftergehäuse 11 befindlichen Lüfters (nicht gezeigt) mit einem Elektromotor 12 und einem mittels einer Welle 13 an diesen gekoppelten Kompressor 14 handeln. Das aus den genannten Komponenten bestehende Aggregat ist mit definierten Mess-Stellen a, b, c, d, f und g ausgestattet, welche zum Beispiel eine exakte Temperatur- oder insbesondere Schwingungs- und Geräuschmessung an einem entsprechenden Maschinenteil oder Ort gestatten. Wie dargestellt, sind Motor 12 und Kompressor 14 mittels Maschinenfüssen 15, 16 zum Beispiel ebenerdig aufgestellt, auch das Lüftergehäuse 11 kann auf dem Boden montiert sein.

An den dargestellten Mess-Stellen a bis f kann der entsprechende Messnippel 21 eines tragbaren, insbesondere batteriebetriebenen Datensammelgerätes 20 angesetzt werden. Wie an sich bekannt, können die Mess-Stellen für Geräusch- und Schwingungsmessung automatische Identifikation ausgerüstet sein und können dann neben einer Nutzinformation (zum Beispiel hinsichtlich Körperschall und Schwingung) dann auch eine Identifikations-Information abgeben, welche via Messnippel zur Auswertung durch das Datensammelgerät weitergeleitet wird. Erfindungsgemässer Bestandteil des Datensammelgerätes 20 ist ein hochauflösender Bildschirm (Display) 23, mit dem jedwede Darstellung visualisiert werden kann, zweckmässigerweise nicht nur monochrom, sondern mit besonderem Vorteil in farbiger Darstellung. Das Datensammelgerät 20 umfasst wenigstens ein Speichermittel 35, in dem die möglichen Maschinen, Maschinenteile, Komperatoren, Aggregate oder dergleichen mit allen ihren Mess-Stellen abgelegt sind.

Wie in Figur 1 gezeigt, wird auf dem Display 23 gerade eine perspektivische Ansicht des bereits obig beschriebenen Aggregates wiedergegeben, wobei eine möglichst realistische und detailgetreue Wiedergabe angestrebt wird, welche der einer Fotografie oder eines Fernsehbildes ähnelt. Zusätzlich zu den visuell erkennbaren Dimensionen und den mechanischen Randbedingungen des Aggregates (Bezugsziffern 11 bis 14) wird auf dem Display 23 mittels eines pfeilartigen Symbols 25 auf eine als nächste auszumessende Mess-Stelle hingewiesen, welche anhand des durch Bezugsziffer 24 näher gekennzeichneten Symbols eindeutig identifiziert werden kann. Das pfeilartige Symbol kann dabei durch farbliche Gestaltung oder durch Blinken besonders augenfällig hervorgehoben werden. Gemäss einem besonderen Aspekt der Erfindung ist die Visualisierung einer Szenerie über ein Display 23 dabei nicht statisch, sondern dynamisch. Das heisst, gemäss der erfindungsgemässen Vorgehensweise und den zugehörigen Geräten ist es möglich, dass die relative Position des tragbaren Datensammelgerätes 20 in Bezug zu einem MaschinenAggregat und der Mess-Stellen (zum Beispiel 11, 12, 14) mittels eines übergeordneten Systems festgestellt wird. Gemäss einer solchen Positionsinformation wird sodann ein bestzugeordnetes Abbild eines zu überprüfenden Maschinen-Aggregates samt hervorgehoben dargestellten Mess-Steilen, symbolischen oder konkret erscheinenden Arbeitsanweisungen wiedergegeben. Die konkret erscheinenden Arbeitsanweisungen können dabei auf Video-Aufnahmen mit markierten Mess-Stellen basieren, welche in der Vergangenheit durch Bedienpersonal an der gleichen oder einer vergleichbaren Maschine vorgenommen wurden. Die für eine solche Komfort-Darstellung erforderlichen Video-Daten werden dabei bevorzugt, aber nicht notwendigerweise, von einem übergeordneten Leitrechner drahtlos empfangen. Zu diesem Zweck ist eine Daten-Empfangseinrichtung im Datensammelgerät 20 vorhanden, von der in Figur 1 Teile einer zugehörigen Antenne 22 gezeigt sind. Zu der Daten-EmpfangsEinrichtung gehört eine Daten-Sende-Einrichtung (nicht gezeigt) des Datensammelgeräts 20.

Mit den genannten Sende- und Empfangseinrichtungen lässt sich das Datensammelgerät 20 auch vorteilhaft nach Art eines schnurlosen Telefons oder eines Zellular-Telefons benutzen, bei sehr grossen industriellen Anlagen wie Ölfeldern oder Solarfarmen auch nach Art eines Satelliten-Telefons. Es versteht sich, dass neben der Möglichkeit einer Sprachübertragung bevorzugt die Möglichkeit der Datenübertragung von und zu einem übergeordneten Rechner bereitgestellt ist, wie dies an sich bekannt ist. Genauso kann jedoch eine drahtlose Datenübertragung an untergeordnete Rechnereinheiten durchgeführt werden.

Anstelle der drahtlosen Anbindung von selbstidentifizierenden Mess-Stellen an die erfindungsgemässe Vorrichtung zum Erfassen von Daten ist es kostengünstiger, drahtgebundene Aufnehmer- und Identifizierungssysteme zu verwenden. Solche Systeme sind an sich aus der Patentliteratur bekannt und unter dem Handelsnamen "VIBCODE" erhältlich. Gemäss der Erfindung ist es von Vorteil, die von solchen selbstidentifizierenden Mess-Stellen abgegebenen oder abrufbaren Identifikations-Informationen dazu zu verwenden, dass deren tatsächliche Position zunächst in eine bildliche Darstellung einer Maschinenhalle, einer Maschine oder eines Maschinenteils mit Mess-Stellen dargestellt wird (das heisst registriert wird) und zu einem späteren Zeitpunkt eben diese bildliche Darstellung eines solchen Objektes auf dem Display der Vorrichtung zu Kontroll- und Orientierungszwecken reproduziert wird.

Auf diese Weise wird einem Benutzer der Erfindung jeweils ersichtlich, dass er einen Messvorgang am korrekten Platz ausführt. Darüber hinaus kann ausgehend von einer so erhaltenen aktuellen Positionsinformation eine (insbesondere automatisch erstellte) visualisierte Information erfolgen, wo und an welcher Stelle die nächstfolgende Messung erfolgen soll. Sofern eine solche Platzierung nicht massstabsgetreu in einer hochaufgelösten Darstellung der betreffenden Maschine oder eines Objektes (zum Beispiel Wälzlagergehäuse) angezeigt werden kann, kann mit (in das Display der Erfindung einblendbaren) Pfeilsymbolen, Strichen oder dergleichen auf den günstigsten Weg hingewiesen werden, auf dem der nächste anzusteuernde Mess-Stelle erreicht werden kann.

Wiewohl das Datensammelgerät 20 bevorzugt durch Betätigung eines sogenannten TouchPads, einer sogenannten Touch-Screen, einer Rollkugel und ähnlichen Eingabevorrichtungen bedient wird, ist zur Auswahl elementarer Funktionen oder zur Eingabe von alphanummerischer Information eine Tastatur 26 vorgesehen.

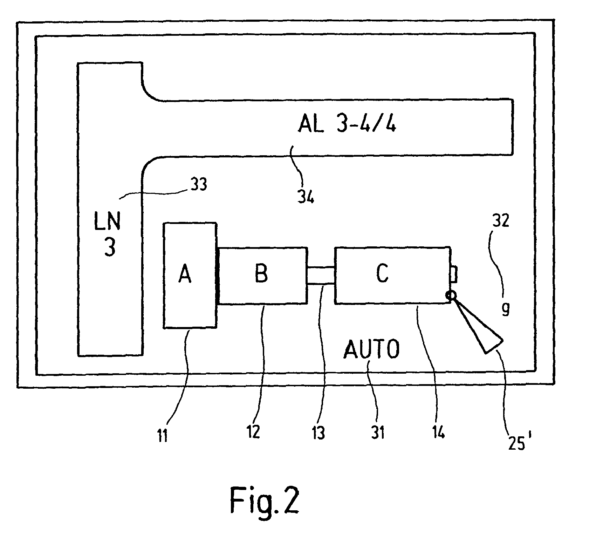

In Figur 2 wird als Beispiel eine andere Visualisierung gezeigt, wie sie auf dem Bildschirm 23 des Datensammelgeräts 20 erscheinen kann. Hierbei handelt es sich um einen Übersichts-oder Lageplan einer Fabrikhalle, für die durch Bezugsziffer 33 eine Hallenstrasse mit der Bezeichnung "LN3" wiedergegeben wird, von der ein Maschinengang mit der Bezeichnung "AL 3-4/4" abzweigt (Bezugsziffer 34). Wie ersichtlich und als Orientierungshilfe für einen Nutzer eines Datensammelgeräts 20, sollen die entsprechenden Maschinen 11, 12, 14 relativ zu diesen Orientierungsmerkmalen angeordnet sein. Ein augenfällig hervorgehobenes Symbol oder eine entsprechende Arbeitsanweisung (Bezugsziffer 25') weist auf eine als nächste zu inspizierende Mess-Stelle "g" (Bezugsziffer 32) hin. Mit der eingeblendeten Darstellung "AUTO" (Bezugsziffer 31) wird beispielsweise signalisiert, dass der Datensammler 20 die zu inspizierenden Mess-Stellen vorgibt und der Nutzer/Bedienperson keine Wahlmöglichkeit hinsichtlich Selektion oder Deselektion einer Mess-Stelle hat. Eine solche würde sonst zum Beispiel mit dem Begriff "MANUELL" signalisiert werden. Die im Vorhergehenden beschriebenen Ausführungsformen stellen nur wichtige Beispiele dar. Insgesamt zielt die Erfindung darauf hin, unter Nutzung sogenannter multimedialer Bedien- und Darstellungs-Elemente anfallende Messaufgaben im industriellen Umfeld, speziell bei der systematischen, unverkabelten Erfassung von Schwingungs- und Geräuschdaten, zu erleichtern und vorteilhafter zu gestalten. Dies wird dadurch bewirkt, dass aussagekräftige Informationen hinsichtlich der Mess-Stellen, der Arbeitsaufgaben und der erhaltenen Ergebnisse insbesondere auf grafische (oder in multimedialer Weise) in Kombination miteinander, detailliert und in hoher bildlicher Auflösung dargestellt werden.

### Weitere bevorzugte Ausgestaltungen der Erfindung:

Bevorzugte weitere Ausgestaltungen der Erfindung sind durch folgende Merkmale charakterisiert:

Messergebnisse an einer Mess-Stelle, die an einer Maschine oder einem Aggregat aktuell (oder in der Vergangenheit) erhalten worden sind, können direkt in visueller Weise mit dem Aggregatebild in Zusammenhang gebracht werden. Dies geschieht zum Beispiel in einfacher Weise durch eine Verbindungslinie zwischen dem visualisierten Messergebnis und der betreffenden visualisierten Mess-Stelle an der Maschine. In einer anderen Weise, welche höheren Bedienungskomfort darstellt, wird eine vorrangig zu untersuchende Mess-Stelle einer Maschine durch hervorgehobene (intensivierte, das heisst hellere) Darstellung kenntlich gemacht und ein entsprechendes Messergebnis angezeigt. Anstelle oder zusätzlich zum Messergebnis kann das Resultat einer Bewertung eines Messergebnisses oder das Resultat einer Auswertung einer Mehrzahl von relevanten Messergebnissen in dieser genannten Weise visualisiert werden. Eine diesbezügliche weitere Art der Hervorhebung und Identifizierung von Maschinen, Aggregaten und so weiter besteht darin, diese durch eine farbliche Kodierung mehr oder wenig auffällig auf einem Display wiederzugeben. Beispielsweise kann, je nach Notwendigkeit und vordefiniertem Prioritätsmass, eine Maschine oder ein Maschinenteil (zum Beispiel Wälzlager) in Bezug zur Mess-Stelle rot dargestellt werden, sofern ein Problem vorhanden ist oder vorzuliegen scheint, oder eher in einer anderen Farbe (zum Beispiel grün, blau, braun, weiss), falls die entsprechenden Maschinen-Parameter in Ordnung zu sein scheinen.

Anstelle einer allgemeinen Farbgebung können die Messergebnisse mit bekannten grafischen Mitteln direkt dem Aggregate-Bild (oder einem Detail-Bild davon) auf einem Display zugeordnet werden, zum Beispiel mit Balkendiagrammen, zugehörigen Grenzwert-Indikatoren, oder zum Beispiel mit zusätzlicher Visualisierung einer Richtung mit Hilfe von pfeilartigen Symbolen. Gerade die Visualisierung einer Richtung (zum Beispiel für die Intensitätsabnahme von Körperschall) kann die genauere Untersuchung der Quelle einer Störung deutlich erleichtern.

Es ist von Vorteil, wenn die erfindungsgemässe Vorrichtung mittels Verknüpfungen stufenweise weitere Kennwerte bilden kann, welche ein Benutzer wahlweise abrufen und in einer oder mehreren Darstellungsarten auf dem Display der erfindungsgemässen Vorrichtung in Bezug zur Mess-Stelle visualisieren kann oder mittels einer akustischen Signalgabe als relevant darstellen kann.

In weiterer Ausgestaltung der Erfindung werden, je nach dem Resultat einer Bewertung eines einzelnen oder mehrerer Messergebnisse, automatisch oder nach Anforderung durch einen Bediener, zusätzliche Diagnoseverfahren aufgerufen und deren Ergebnisse angezeigt, das heisst in Relation zu einer oder mehreren Mess-Stellen der Maschinen oder deren Teilen visualisiert. Solche Diagnoseverfahren können zum Beispiel auf Frequenzanalysen, Darstellung von Zeitsignalen, Häufigkeitsverteilungs-Untersuchungen und ähnlichen Abbildungen beruhen.

Werden Schwingungen untersucht, ist es fallweise von Interesse, eine dominierende Schwingungsform eines Bauteils oder einer ganzen Maschine zu untersuchen und darzustellen. Ein durch die erfindungsgemässe Vorrichtung erhaltenes diesbezügliches Messergebnis (nach Messung an mehreren Mess-Stellen) kann grafisch per Betrag und zugeordneter Richtung der lokalen Schwingungsvektoren an Mess-Stellen dargestellt werden. Solche Schwingungsvektoren können insbesondere solche sein, die einer ausgewählten Frequenzkomponente zugeordnet werden können, zum Beispiel einer Eigenfrequenz, oder einer sonst wie dominierenden Frequenz einer Maschine oder eines Maschinenteils.

Neben der vorteilhaften grafischen Visualisierung auf einem Bildschirm ist erfindungsgemäß zusätzlich, eventuell auch nur alleine, eine Informationsausgabe auf akustischem Wege, zum Beispiel mittels Lautsprecher oder Kopfhörer, von Vorteil. Dies kann zum Beispiel ein gesprochener Kommentar oder Hinweis an den Benutzer sein oder die sprachliche Formulierung eines nächsten Arbeitsschrittes an einer nächsten Mess-Stelle. In weiterer Ausgestaltung der Erfindung kann dies auch die Ausgabe eines genau definierten Referenztones sein, gegen den ein Maschinengeräusch dann subjektiv verglichen werden kann. Gemäss der Erfindung ist es dann möglich, das Ergebnis eines solchen subjektiven Vergleiches per Spracheingabe festzuhalten, das heisst zu dokumentieren. Hierbei kann eine solche gesprochene Information in einem Speicher des Gerätes für anschliessende Wiedergabe festgehalten werden oder drahtlos an einen übergeordneten Sprachspeicher weitergegeben werden.

Werden mittels der erfindungsgemässen Vorrichtung an der Mess-Stelle an einem Maschinenaggregat, einer einzelnen Maschine oder an einzelnen Maschinenteilen ungewöhnliche, abweichende oder insbesondere kritische Zustände gemessen, so können die Daten solcher Vorkommnisse nicht nur registriert und visualisiert werden, sondern es können auch Anweisungen und maschinengesteuerte Ausgaben von Hilfs-Informationen betreffend vorzunehmender Instandhaltungsarbeiten visualisiert werden. Solche Instandhaltungsarbeiten betreffen beispielsweise das Auswuchten von Maschinenteilen, das Ausrichten von Maschinenteilen oder die Kontrolle von Befestigungselementen.

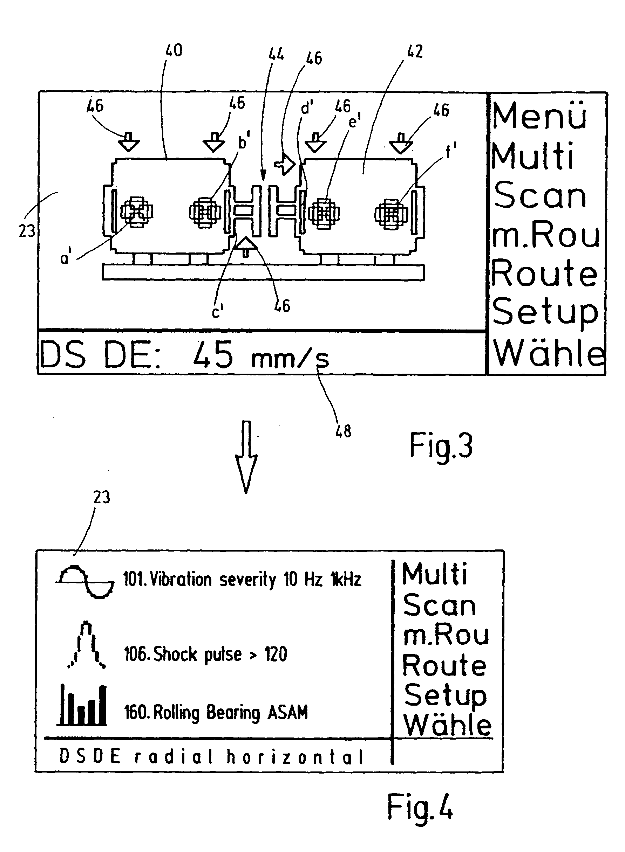

In den Figuren 3 und 4 ist die Erfindung anhand eines weiteren konkreten Beispiels verdeutlicht. In den Figuren ist jeweils der Bildschirm 23 des Datensammelgerätes 20 dargestellt. Der Bildschirm 23 gibt nach Aufruf ein zu überprüfendes Messobjekt bildlich/grafisch wieder. Dieses Messobjekt ist beispielsweise aus dem Lageplan einer Fabrikhalle oder dergleichen (Figur 2) ausgewählt. Im gezeigten Beispiel ist eine Antriebsmaschine 40 und eine von der Antriebsmaschine 40 angetriebene Pumpe 42 dargestellt. Diese sind über eine Kupplung 44 miteinander gekuppelt. Der Bedienperson wird auf dem Bildschirm 23 des Datensammelgerätes 20 die Antriebsmaschine 40 und die Pumpe 42 mit ihren möglichen Mess-Stellen a', b', c', d', e' und f dargestellt. Diese Mess-Stellen sind an ihrer tatsächlichen räumlichen Anordnung an den Aggregaten auf der Darstellung kenntlich gemacht. Zusätzlich sind Pfeile 46 dargestellt, die nochmals deutlich in die Richtung der Mess-Stellen zeigen. Die Bedienperson des Datensammelgerätes 20 kann nunmehr eine der Mess-Stellen a', b', c', d', e', f auswählen und erkennt sofort, wo diese Mess-Stelle konkret an den Aggregaten angeordnet ist. Bei dem hier dargestellten konkreten Ausführungsbeispiel soll davon ausgegangen werden, dass die Mess-Stelle e' die ausgewählte Mess-Stelle sein soll. In einer Statuszeile 48 des Bildschirms 23 wird die ausgewählte Mess-Stelle e' nochmals eindeutig definiert. Im gezeigten Beispiel gibt die Statuszeile wieder "DS DE: 4,5 mm/s", wobei DS Drive Shaft (Antriebswelle) und DE Drive End (Antriebsseite) bedeutet. Gleichzeitig erfolgt eine Schwingwertangabe über die aktuelle Ist-Schwingung der Maschine.

Um die Bedienerführung zu vereinfachen, kann die ausgewählte Mess-Stelle durch eine farbliche Änderung des der Mess-Stelle e' zugeordneten Pfeils 46 oder durch dessen Aufblinken oder auf andere geeignete Weise nochmals deutlich hervorgehoben werden. Nach Auswahl der Mess-Stelle e' springt die Darstellung auf dem Bildschirm 23 in die an der Mess-Stelle e' möglichen durchzuführenden Messaufgaben. Hierzu ist in Figur 4 beispielhaft dargestellt, dass entweder eine Messaufgabe 101 Schwingungsmessung (Vibration severity 10 Hz bis 1 kHz), eine Messaufgabe 106 Impulsmessung (Shock pulse > 120) oder eine Messaufgabe 160 Unwucht (Rolling Bearing ASAM) ausgewählt werden. Durch Menüführung wird eine der für die ausgewählte Mess-Stelle e' vorgegebene Messaufgabe ausgewählt. Daraufhin wird durch das Datensammelgerät 20 die jeweilige Messaufgabe ausgeführt. Die jeweilig ermittelten Messergebnisse können durch weiteres Umspringen der Darstellung auf dem Bildschirm 23 gleich angezeigt werden (ist nicht dargestellt). Die Messergebnisse werden durch das Datensammelgerät 20 erfasst und gespeichert. Hierbei kann die Speicherung entweder als Zwischenspeicherung erfolgen und/oder gleichzeitig einem übergeordneten System zur weiteren Erfassung, Archivierung und/oder Auswertung überspielt werden. Dies kann beispielsweise über die bereits erwähnte Funkübertragung zwischen Datensammelgerät und übergeordnetem System erfolgen.

## Patentansprüche

1. Vorrichtung zum Erfassen von Schwingungssignalen und/oder Körperschallsignalen eines technischen Systems, das wenigstens ein Messobjekt umfasst, mit einem tragbaren Datensammelgerät (20), das mit dem wenigstens einen Messobjekt zugeordneten Mess-Stellen verbindbar ist, und das Bedien- und Funktionseinrichtungen aufweist, mittels denen wenigstens eine Messaufgabe an wenigstens einer der Mess-Stellen abarbeitbar ist, und wenigstens ein hieraus resultierendes Messergehnis erfassbar ist, wobei das Datensammelgerät (20) wenigstens ein Speichermittel (35) umfasst, in dem das wenigstens eine Messobjekt (11, 12, 13, 14) mit seinen Mess-Stellen (a, b, c, d, e, f) derart abgelegt ist, dass dieses auf einer Anzeigeeinrichtung (23) des Datensammelgerätes (20) mit seinen Mess-Stellen (a, b, c, d, e, f) darstellbar ist, und wobei anhand dieser Darstellung von einer Bedienperson eine beliebige oder vorgegebene der dargestellten Mess-Stellen (a, b, c, d, e, f) auswählbar ist und für die ausgewählte Mess-Stelle (f) die wenigstens eine Messaufgabe abrufbar ist, **dadurch gekennzeichnet, dass** das Datensammelgerät (20) Mittel zur Informationsausgabe an die Bedienperson auf akustischem Wege aufweist.

2. Vorrichtung nach Anspruch 1, **dadurch gekennzeichnet, dass** die Mittel zur Informationsausgabe einen Lautsprecher oder Kopfhörer aufweisen.

3. Vorrichtung nach Anspruch 1 oder 2, **dadurch gekennzeichnet, dass** die Mittel zur Informationsausgabe für die Ausgabe von Sprache ausgebildet sind.

4. Vorrichtung nach Anspruch 3, **dadurch gekennzeichnet, dass** die Mittel zur Informationsausgabe für die Ausgabe von Arbeitsanweisungen ausgebildet sind.

5. Vorrichtung nach Anspruch 4, **dadurch gekennzeichnet, dass** die Mittel zur Informationsausgabe für die sprachliche Formulierung eines nächsten Arbeitsschrittes an einer nächsten Mess-Stelle (a, b, c, d, e, f) ausgebildet sind.

6. Vorrichtung nach Anspruch 4 oder 5, **dadurch gekennzeichnet, dass** die Arbeitsanweisungen die Anweisung an die Bedienperson, sich in die Nähe einer vordefinierten Mess-Stelle (a, b, c, d, e, f) zu begeben, und/oder die Anweisung an die Bedienperson, eine Messung inklusive einer Plausibilitätsbetrachtung hinsichtlich Gültigkeit eines Messergebnisses auszuführen, beinhalten.

7. Vorrichtung nach einem der Ansprüche 4 bis 6, **dadurch gekennzeichnet, dass** die Mittel zur Informationsausgabe für die Ausgabe von Information über Randbedingungen einer folgenden Messaufgabe ausgebildet sind.

8. Vorrichtung nach einem der vorhergehenden Ansprüche, **dadurch gekennzeichnet, dass** die Mittel zur Informationsausgabe für die Ausgabe von akustischen Signalen ausgebildet sind, welche sich direkt von einem zu untersuchenden akustischen Signal ableiten.

9. Vorrichtung nach Anspruch 8, **dadurch gekennzeichnet, dass** die akustischen Signale frequenzgefiltert oder frequenztransformiert sind oder mit einem Testgeräusch in vordefinierter Weise gemischt sind.

10. Vorrichtung nach Anspruch 8 oder 9, **dadurch gekennzeichnet, dass** die Mittel zur Informationsausgabe für die Ausgabe eines genau definierten Referenztones ausgebildet sind, gegen den ein Maschinengeräusch von der Bedienperson subjektiv verglichen werden kann.

11. Vorrichtung nach Anspruch 10, **dadurch gekennzeichnet, dass** das Datensammelgerät (20) einen Speicher sowie Mittel zur Spracheingabe aufweist, um das Ergebnis eines subjektiven Vergleiches des Maschinengeräuschs mit dem Referenzton per Eingabe gesprochener Information durch die Bedienperson für anschließende Wiedergabe festzuhalten.

12. Vorrichtung nach Anspruch 10, **dadurch gekennzeichnet, dass** das Datensammelgerät (20) Mittel aufweist, um das Ergebnis eines subjektiven Vergleiches des Maschinengeräuschs mit dem Referenzton an einen übergeordneten Sprachspeicher weitergegeben.

13. Vorrichtung nach einem der vorhergehenden Ansprüche, **dadurch gekennzeichnet, dass** das Datensammelgerät (20) Mittel zur Eingabe von gesprochener Information durch die Bedienperson aufweist.

14. Vorrichtung nach einem der vorhergehenden Ansprüche, **dadurch gekennzeichnet, dass** das Datensammelgerät (20) Mittel zur Sprachübertragung an einen übergeordneten Rechner aufweist.

15. Verfahren zum Erfassen von Schwingungssignalen und/oder Körperschallsignalen eines technischen Systems, wobei ein tragbares Datensammelgerät (20) mit einer Mess-Stelle eines Messobjektes verbunden wird und wenigstens eine Messaufgabe an der Mess-Stelle abgearbeitet wird und ein erhaltenes Messergebnis erfasst wird, wobei das wenigstens eine Messobjekt (11, 12, 13, 14) auf einer Anzeigeeinrichtung (23) des Datensammelgerätes (20) dargestellt ist, und wobei die Mess-Stellen (a, b, c, d, e, f) des Messobjektes (11, 12, 13, 14) mit dargestellt werden und eine Bedienperson eine beliebige oder vorgegebene der dargestellten Mess-Stellen (a, b, c, d, e, f) auswählt und für die ausgewählte Mess-Stelle (f) die wenigstens eine Messaufgabe abgearbeitet wird, **dadurch gekennzeichnet, dass** eine Informationsausgabe an die Bedienperson auf akustischem Wege stattfindet.
